# FASCICULE DE BREVET EUROPEEN

(11) **EP 3 824 389 B1**
(45) Date de publication et mention de la délivrance du brevet: **10.09.2025**
(21) Numéro de dépôt: 19753139.5
(22) Date de dépôt: 02.07.2019
(51) Int. Cl.: G06F 9/52

(54) **PROCÉDÉ DE COORDINATION D'UNE PLURALITÉ DE SERVEURS DE GESTION D'ÉQUIPEMENTS**
VERFAHREN ZUR KOORDINATION MEHRERER VORRICHTUNGSVERWALTUNGSSERVER
METHOD FOR COORDINATING A PLURALITY OF DEVICE MANAGEMENT SERVERS

(30) Priorité: 20.07.2018 FR 1856776
(43) Date de publication de la demande: 26.05.2021
(73) Titulaire: Orange, 92130 Issy-les-Moulineaux (FR)
(72) Inventeur: MEZGHANI, Emna, 92326 CHÂTILLON CEDEX (FR); DOUET, Marc, 92326 CHÂTILLON CEDEX (FR)
(74) Mandataire: Plasseraud IP
(86) Numéro de dépôt international: PCT/FR2019/051630
(87) Numéro de publication internationale: WO 2020/016499

(56) Documents cités:
- WO-A1-01/90903
- GB-A- 2 530 552
- US-A- 5 841 981
- US-A1- 2013 024 556

## Description

La présente invention concerne le domaine des équipements communiquant en M2M (pour « Machine To Machine » en anglais, ou « de machine à machine » en français), et en particulier de la coordination de serveurs de gestion d'équipements pour coordonner les opérations de différents équipements d'un réseau.

En 2017, le nombre d'objets connectés en circulation dans le monde était estimé à environ 20 milliards. En 2025, selon des prédictions, ce nombre sera supérieur à 75 milliards. Ce nombre croissant d'objets connectés, ainsi que la possibilité pour ces objets d'échanger des données entre eux via l'Internet des Objets (« Internet of Things », ou IoT en anglais), rendent nécessaire le développement de serveurs de gestion d'équipements (« Device Management » en anglais).

Un serveur de gestion d'équipements a pour but de gérer les opérations de gestion d'une flotte d'équipements, mobiles ou non, connectés à un réseau. Par exemple, ces équipements peuvent comprendre des ordinateurs, des tablettes, des téléphones mobiles, des imprimantes, etc. Ces équipements peuvent aussi comprendre des équipements issus de domaines d'applications très variés, comme la domotique (par exemple un détecteur de présence ou de mouvement, ou un thermostat connecté), les transports (par exemple, un vélo, un scooter ou une voiture dotés de capteurs), la logistique (par exemple, des objets munis de dispositifs d'identification à radiofréquence, comme une puce RFID), la santé (par exemple des outils chirurgicaux munis de capteurs, ou des équipements de mesure/surveillance configurés pour transmettre des informations concernant des variables biologiques d'un patient vers un serveur), etc.

En particulier, un serveur de gestion d'équipements gère l'exécution des opérations sur les équipements, et assure la sécurité et la pérennité du réseau, notamment en propageant des patchs de sécurité et en effectuant des mises à jour des équipements.

Du fait de l'hétérogénéité des équipements, il est généralement nécessaire de disposer d'une pluralité de serveurs de gestion, qui doivent communiquer entre eux pour assurer la gestion conjointe des groupes d'équipements auxquels ils sont associés.

Cependant, les solutions existantes ne permettent pas de gérer certaines configurations qui peuvent nuire au bon déroulement des opérations de gestion ou à la sécurité des équipements.

Par exemple, certaines opérations telles que le redémarrage ou la mise à jour du micrologiciel (ou « firmware » en anglais) d'un équipement peuvent entraîner une perte de connectivité temporaire de cet équipement. Ainsi, les équipements qui lui sont connectés perdent aussi la connectivité de manière temporaire. En cas d'une opération de mise à jour de sécurité urgente sur ces équipements, les serveurs de gestion d'équipements qui gèrent ces équipements ne peuvent pas les atteindre. Ainsi, la mise à jour ne peut pas être faite, ce qui compromet la sécurité des équipements.

D'autres opérations comme les configurations ou les mises à jour des interfaces de programmation (« application programming interface », ou API en anglais) des équipements peuvent entrainer un disfonctionnement entre les équipements. Par exemple, si l'un des équipements n'a pas mis à jour une interface de programmation, cela peut engendrer une impossibilité pour communiquer avec les équipements qui ont effectué la mise à jour de leur interface de programmation.

Ainsi, il existe un besoin pour améliorer la gestion des équipements dans un environnement multiserveur. L'état de la technique antérieure de la présente invention comprend la publication du brevet américain US 2013/024556A1 qui divulgue une coordination de fonctionnement de dispositifs machine à machine.

La présente invention vient améliorer la situation.

A cet effet, la présente invention propose un procédé de coordination d'une pluralité de serveurs de gestion d'équipements dans un réseau informatique, ladite pluralité de serveurs de gestion d'équipements comprenant au moins un premier serveur de gestion et un deuxième serveur de gestion distincts, le procédé, mis en oeuvre par un serveur informatique de coordination, comprenant :
- recevoir une première instruction à destination d'un premier équipement rattaché audit premier serveur de gestion ;
- recevoir une deuxième instruction à destination d'un deuxième équipement rattaché audit deuxième serveur de gestion ;
- obtenir des informations de dépendance relatives à une dépendance entre le premier équipement et le deuxième équipement ;
- obtenir des règles de coordination d'exécution de la première instruction et de la deuxième instruction ;
- déterminer un ordre d'exécution de la première instruction et de la deuxième instruction à partir des informations de dépendance et des règles de coordination obtenues ;
- générer et envoyer un premier signal de commande d'exécution de la première instruction et un deuxième signal de commande d'exécution de la deuxième instruction en fonction de l'ordre déterminé.

Avantageusement, le procédé de coordination tient compte des dépendances qui existent entre les différents équipements du réseau pour orchestrer l'exécution des opérations sur ces équipements. Cela permet d'éviter, par exemple, qu'un équipement sur lequel une opération est en cours (comme une mise à jour) soit déconnecté du réseau parce qu'une autre opération (comme un redémarrage) est mise en œuvre sur l'équipement qui lui fournit la connexion. Cela permet aussi d'éviter des problèmes d'incompatibilité entre les interfaces de programmation de deux équipements, lorsque ces deux équipements sont liés dans l'exécution d'une série d'opérations (par exemple, allumage de lampes via un assistant vocal).

Il est entendu par « instruction à destination d'un équipement » une instruction relative à une opération de gestion à exécuter sur cet équipement. Il est entendu par « règles de coordination d'exécution des instructions reçues » des règles de coordination pour l'exécution des opérations de gestion associées aux instructions reçues. Dans la suite, par souci de simplification, les règles de coordination d'exécution des instructions peuvent être désignées par « règles de coordination d'exécution des opérations ».

Par « dépendance » entre deux équipements, on entend que le fonctionnement de l'un des équipements est lié au fonctionnement de l'autre équipement, ou que l'exécution d'une opération par / sur un équipement a un effet sur l'autre équipement.

La prise en compte de la dépendance entre les équipements est particulièrement avantageuse dans un environnement multiserveur, dans lequel des équipements dépendants les uns des autres peuvent être gérés par des serveurs distincts et indépendants. En effet, lorsque des équipements dépendants sont gérés par des serveurs indépendants, une opération peut être lancée sur un équipement sans tenir compte de l'impact qu'elle a sur les équipements qui lui sont dépendants. Cela peut compromettre le bon fonctionnement des équipements dépendants, ainsi que la sécurité de l'ensemble du réseau.

Par ailleurs, le fait que la coordination soit gérée par un serveur « intermédiaire » (qui « intercepte » les instructions, les stocke et détermine leur ordre d'exécution avant de les retransmettre) évite que les serveurs de gestion doivent communiquer entre eux et gérer de leur côté la coordination des opérations. Cela permet de ne pas modifier la structure des serveurs de gestion, et de limiter le nombre d'interconnexions, réduisant ainsi l'utilisation de la bande passante.

Le serveur de coordination détermine un ordre d'exécution (c'est-à-dire un ordonnancement des opérations à exécuter) pour les instructions, et commande l'exécution des instructions selon l'ordre déterminé. L'ordre d'exécution déterminé définit un critère d'ordonnancement pour un envoi séquentiel des signaux de commande (par exemple dans l'ordre déterminé), ou pour une exécution séquentielle des opérations associées aux signaux de commande (par exemple dans l'ordre déterminé), ou pour tout autre technique d'envoi de signaux selon un ordonnancement.

Par exemple, lesdites informations de dépendance peuvent comprendre :
- une information de dépendance de connectivité entre le premier équipement et le deuxième équipement ; et/ou
- une information de dépendance de service entre le premier équipement et le deuxième équipement.

Par « dépendance de connectivité » entre deux équipements, on entend que l'un des équipements fournit la connectivité ou est connecté à l'autre équipement via un protocole de communication. Par « dépendance de service » entre deux équipements, on entend que l'exécution d'un service sur l'un des équipements fait intervenir l'autre équipement.

Selon un mode de réalisation, le premier signal de commande peut être envoyé au premier serveur de gestion, et le deuxième signal de commande peut être envoyé au deuxième serveur de gestion.

Dans ce mode de réalisation, le serveur de coordination transmet aux serveurs un signal pour commander l'exécution des opérations, et ce sont les serveurs de gestion qui envoient le signal d'exécution des opérations aux équipements, comme cela est fait sur les serveurs de gestion d'équipements classiques. Les serveurs de gestion peuvent en outre notifier le serveur de coordination de l'exécution des opérations afin d'orchestrer l'exécution des opérations.

Selon un mode de réalisation alternatif, le premier signal de commande peut être envoyé au premier équipement, et le deuxième signal de commande peut être envoyé au deuxième équipement.

Selon ce mode de réalisation alternatif, c'est le serveur de coordination lui-même qui envoie la commande d'exécution des opérations aux équipements. Autrement dit, il n'est pas nécessaire de repasser par les serveurs de gestion pour commander l'exécution des opérations sur les équipements. Selon cette configuration, des mécanismes de sécurité, de certification ainsi que d'interopérabilité peuvent être intégrés dans le serveur de coordination. L'accord de l'opérateur peut aussi être nécessaire.

Dans un ou plusieurs modes de réalisation, le procédé peut en outre comprendre :
- pour chaque serveur de gestion courant parmi le premier serveur de gestion et le deuxième serveur de gestion, recevoir des données descriptives correspondant audit serveur de gestion courant, lesdites données descriptives comprenant :
   une définition d'une pluralité d'équipements rattachés audit serveur de gestion courant,
   des informations de dépendance entre des équipements de ladite pluralité d'équipements (311, 312) rattachés audit serveur de gestion courant,
   une définition d'opérations associées à ladite pluralité d'équipements rattachés audit serveur de gestion courant, et
   une définition d'effets associés auxdites opérations sur au moins un équipement parmi ladite pluralité d'équipements rattachés audit serveur de gestion courant ;
- déterminer lesdites règles de coordination d'exécution à partir desdites données descriptives reçues pour le premier serveur de gestion et le deuxième serveur de gestion.

Par exemple, le serveur de coordination peut recevoir, de la part de chaque serveur de gestion, un ensemble d'informations permettant de décrire les équipements qui lui sont rattachés, ainsi que les opérations possibles pour ces équipements, et les effets que ces opérations peuvent engendrer auprès d'autres équipements qui dépendent de ces équipements. A partir de ces informations, le serveur de coordination peut déterminer l'ordre d'exécution des opérations sur les différents équipements du réseau, à partir des règles de coordination d'exécution des différentes instructions..

En outre, les règles de coordination d'exécution peuvent être déterminées à partir de critères de qualité de service prédéterminés.

Ces critères de qualité de service peuvent être issus des contrats de service souscrits entre un client et un opérateur.

Les opérations de gestion associées à la pluralité d'équipements peuvent notamment comprendre : un redémarrage d'un équipement parmi ladite pluralité d'équipements rattachés audit serveur de gestion courant, une mise à jour sur un équipement parmi ladite pluralité d'équipements rattachés audit serveur de gestion courant, une configuration d'un équipement parmi ladite pluralité d'équipements rattachés audit serveur de gestion courant, ou une réinitialisation d'un équipement parmi ladite pluralité d'équipements rattachés audit serveur de gestion courant.

Les effets associés aux opérations peuvent comprendre : une perte de connectivité d'un équipement parmi ladite pluralité d'équipements rattachés audit serveur de gestion courant, ou une incompatibilité fonctionnelle entre deux équipements parmi ladite pluralité d'équipements rattachés audit serveur de gestion courant.

Dans un ou plusieurs modes de réalisation, le procédé peut en outre comprendre, pour chaque signal de commande parmi ledit premier signal de commande et ledit deuxième signal de commande, une réception d'un accusé de réception dudit signal de commande.

Dans un ou plusieurs modes de réalisation, le procédé peut en outre comprendre, pour chaque signal de commande parmi ledit premier signal de commande et ledit deuxième signal de commande, recevoir un accusé d'exécution de l'instruction respective associée audit signal de commande.

Cela permet de vérifier que les signaux de commande ont bien été reçus (dans le cas des accusés de réception) par les entités réceptrices (par exemple, les serveurs de gestion ou les équipements), et/ou de vérifier qu'une opération a bien été initialisée / exécutée / prise en compte (dans le cas des accusés d'exécution). Dans le cas où un accusé de réception / d'exécution n'est pas reçu au niveau du serveur de coordination, des mécanismes de fonctions de rappel (ou « callback » en anglais) et de gestion d'erreurs peuvent être mis en œuvre. Ainsi, il peut être décidé, par exemple, d'envoyer à nouveau le signal de commande. Il peut aussi être décidé, de manière alternative ou complémentaire, de stopper les envois des autres signaux de commande tant qu'un accusé de réception / d'exécution n'a pas été reçu (par exemple, toutes les commandes correspondant à des opérations ultérieures, par rapport à l'ordre d'exécution des instructions déterminé, à l'opération pour laquelle l'accusé de réception / d'exécution n'a pas été reçu).

Dans un ou plusieurs modes de réalisation, l'ordre d'exécution peut définir une instruction à exécuter en premier parmi la première instruction et la deuxième instruction. Le procédé peut en outre comprendre une réception de l'accusé d'exécution de l'instruction à exécuter en premier en réponse à l'envoi du signal de commande associé, et le signal de commande associé à l'instruction à exécuter en deuxième peut être envoyé seulement après réception dudit accusé d'exécution.

Cela permet de n'envoyer un signal de commande à un équipement que lorsque l'opération précédente a bien été exécutée Ainsi, si par exemple une opération B nécessite impérativement qu'une opération A ait préalablement été effectuée, un tel mode de réalisation permet de s'assurer que l'opération B n'est pas exécutée alors que l'opération A n'est pas terminée.

La présente invention vise aussi un serveur de coordination d'une pluralité de serveurs de gestion d'équipements dans un réseau informatique, ladite pluralité de serveurs de gestion d'équipements comprenant au moins un premier serveur de gestion et un deuxième serveur de gestion, le serveur de coordination étant configuré pour :
- recevoir une première instruction à destination d'un premier équipement rattaché audit premier serveur de gestion et une deuxième instruction à destination d'un deuxième équipement rattaché audit deuxième serveur de gestion ;
- obtenir des informations de dépendance relatives à une dépendance entre le premier équipement et le deuxième équipement ;
- obtenir des règles de coordination d'exécution de la première instruction et de la deuxième instruction ;
- déterminer un ordre d'exécution pour la première instruction et la deuxième instruction à partir des informations de dépendance et des règles de coordination obtenues ;
- générer et envoyer un premier signal de commande d'exécution de la première instruction et un deuxième signal de commande d'exécution de la deuxième instruction en fonction de l'ordre déterminé.

Selon un autre aspect, l'invention vise un système comprenant :
- une pluralité de serveurs de gestion d'équipements dans un réseau informatique, ladite pluralité de serveurs de gestion d'équipements comprenant au moins un premier serveur de gestion et un deuxième serveur de gestion ;
- une pluralité d'équipements rattachés à ladite pluralité de serveurs de gestion d'équipements, ladite pluralité d'équipements comprenant au moins un premier équipement rattaché audit premier serveur de gestion et un deuxième équipement rattaché audit deuxième serveur de gestion ;
- au moins une mémoire stockant :
   - une base de données de dépendance comprenant des informations de dépendance relatives à une dépendance entre des équipements parmi ladite pluralité d'équipements ; et
   - une base de connaissance de coordination comprenant une pluralité de règles de coordination d'instructions sur des équipements parmi ladite pluralité d'équipements ;
- un serveur de coordination configuré pour :
   - recevoir une première instruction à destination dudit premier équipement et une deuxième instruction à destination dudit deuxième équipement ;
   - obtenir, à partir de la base de données de dépendance, des informations de dépendance entre le premier équipement et le deuxième équipement ;
   - obtenir, à partir de la base de connaissance de coordination, des règles de coordination d'exécution de la première instruction et de la deuxième instruction ;
   - déterminer un ordre d'exécution pour la première instruction et la deuxième instruction à partir desdites informations de dépendance récupérées et desdites règles de coordination obtenues ;
   - générer et envoyer un premier signal de commande d'exécution de la première instruction et un deuxième signal de commande d'exécution de la deuxième instruction en fonction de l'ordre déterminé.

La mémoire peut en outre stocker des instructions reçues pour les différents équipements rattachés aux serveurs de gestion. Cela permet notamment de déterminer un ordre d'exécution sur un ensemble d'instructions (par exemple, des instructions reçues pendant un intervalle de temps prédéterminé, ou un nombre prédéterminé d'instructions reçues).

La « mémoire » peut être distribuée, de sorte que les bases de données de dépendance et les bases de connaissance de coordination, et/ou les instructions peuvent être stockées sur des supports physiques différents.

Par ailleurs, le système peut en outre comprendre un module de dépendance configuré pour détecter / gérer les dépendances entre les différents équipements du système. Le module de dépendance peut être relié à la base de données de dépendance. Dans un mode de réalisation, le module de dépendance est compris dans le serveur de coordination.

Un programme informatique, mettant en œuvre tout ou partie du procédé décrit ci-avant, installé sur un ou plusieurs équipement(s) préexistant(s), est en lui-même avantageux, dès lors qu'il permet la coordination d'une pluralité de serveurs de gestions.

Ainsi, la présente invention vise également un programme informatique comportant des instructions pour la mise en œuvre de certaines des étapes du procédé précédemment décrit, lorsque ce programme est exécuté par un processeur.

Ce programme peut utiliser n'importe quel langage de programmation (par exemple, un langage objet ou autre), et être sous la forme d'un code source interprétable, d'un code partiellement compilé ou d'un code totalement compilé.

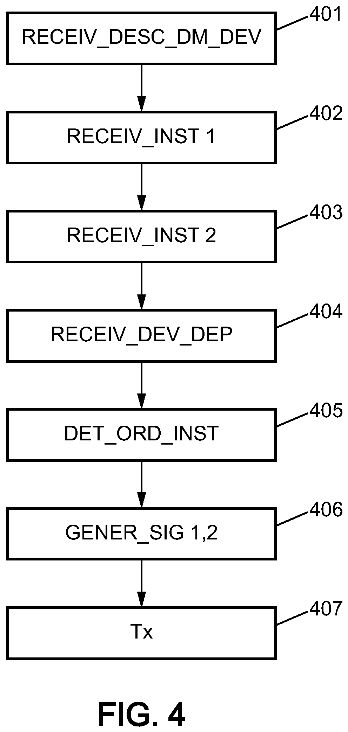

La figure 4, décrite en détails ci-après, peut former l'organigramme de l'algorithme général d'un tel programme informatique selon un mode de réalisation de l'invention. Une partie ou la totalité des étapes de cet organigramme peuvent être exécutées en parallèle, ou selon un mode séquentiel.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, pour exécuter tout ou partie du procédé décrit ci-avant.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre un système comprenant une pluralité de serveurs de gestion d'équipements, selon un mode de réalisation de l'invention ;
- la figure 2 représente un exemple de dépendances entre plusieurs équipements informatiques ;
- la figure 3 représente un serveur de coordination d'une pluralité de serveurs de gestion d'équipements, selon un mode de réalisation de l'invention ;
- la figure 4 est un ordinogramme du procédé de coordination d'une pluralité de serveurs de gestion d'équipements, selon un mode de réalisation de l'invention ;
- la figure 5 illustre un exemple de dispositif de coordination d'une pluralité de serveurs de gestion d'équipements, selon un mode de réalisation de l'invention.

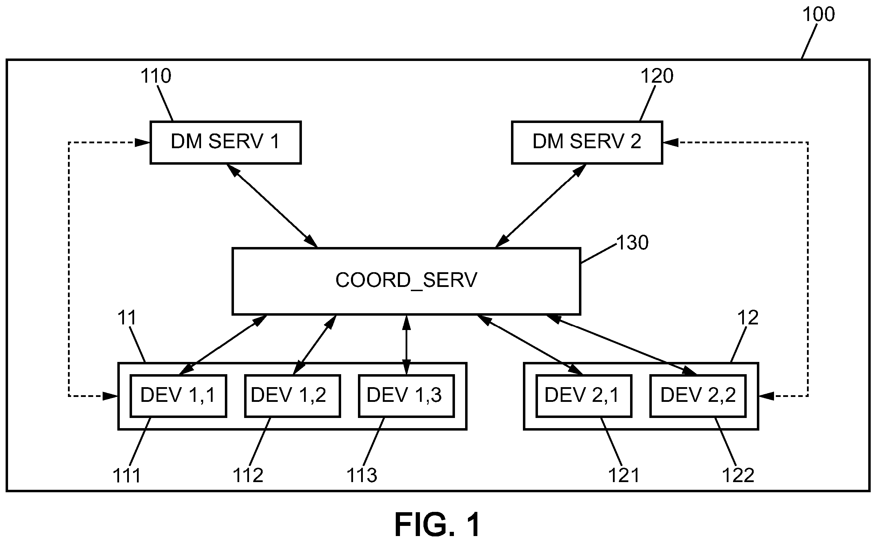

La figure 1 illustre un système comprenant une pluralité de serveurs de gestion d'équipements, selon un mode de réalisation de l'invention.

La figure 1 représente un premier serveur de gestion 110 en charge de la gestion d'un premier ensemble 11 d'équipements 111, 112, 113 connectés à un réseau 100, ainsi qu'un deuxième serveur de gestion 120 en charge de la gestion d'un deuxième ensemble 12 d'équipements 121, 122 connectés au même réseau 100. Les deux serveurs de gestion 110 et 120 sont indépendants. Le réseau 100 peut être n'importe quel réseau informatique, comme un réseau local (en anglais, « Local Area Network », ou LAN) ou un réseau étendu (en anglais, « Wide Area Network », ou WAN) par exemple. Dans un mode de réalisation particulier, un équipement comprend un serveur de gestion qui peut gérer d'autres équipements qui lui sont rattachés.

Le serveur de coordination 130 permet de coordonner les exécutions des opérations sur les différents équipements 111, 112, 113, 121, 122. En particulier, le serveur de coordination 130 peut être configuré pour calculer et déterminer un ordre d'exécution des opérations, afin qu'il n'y ait pas de disfonctionnement sur le système.

En effet, certaines opérations nécessitent d'être réalisées avant d'autres. Par exemple, si un logiciel doit être mis à jour de manière urgente sur certains équipements, l'équipement « parent » qui fournit la connexion au réseau à ces équipements ne doit pas être mis hors tension. Ainsi, si une instruction de redémarrage de cet équipement parent a été émise, il peut être décidé que le redémarrage de l'équipement parent ait lieu après la mise à jour du logiciel des équipements connectés à cet équipement parent.

Selon un mode de réalisation, le serveur de coordination 130 est configuré pour recevoir une instruction concernant une opération de gestion à effectuer sur un équipement ou par un équipement parmi les équipements 111, 112, 113, 121, 122. Cette instruction peut notamment concerner un mode de fonctionnement de l'équipement (par exemple, « allumer / éteindre / redémarrer l'équipement », « augmenter / réduire la luminosité de l'écran », « utiliser l'économiseur de batterie », etc.), une action à effectuer sur un logiciel (par exemple, « installer / désinstaller / mettre à jour un logiciel »), etc.

Cette instruction peut être envoyée au serveur de coordination 130 par le serveur de gestion 110, 120 auquel l'équipement est rattaché, par un autre serveur de gestion, ou encore par une entité externe. Bien entendu, il est possible de combiner ces modes de réalisation, de sorte que certaines instructions peuvent être envoyées au serveur de coordination 130 par un ou plusieurs serveur(s) de gestion 110, 120, tandis que d'autres instructions sont envoyées au serveur de coordination 130 par une ou plusieurs entité(s) externe(s).

L'envoi au serveur de coordination 130 des instructions concernant des opérations à effectuer sur un équipement ou par un équipement parmi les équipements 111, 112, 113, 121, 122 peut être effectué via une ou plusieurs technologies de communication. A titre d'exemples et de manière non limitative, il est possible d'utiliser une ou plusieurs technologies parmi une communication par voie filaire, et des technologies sans fil comme Wifi, Bluetooth, Bluetooth LE, Infrarouge, NFC, Zigbee, Enocean, Z-Wave, Sigfox, LTE-M ou LoRaWAN.

Le serveur de coordination 130 est en outre configuré pour déterminer un ordre d'exécution des opérations à effectuer. Une fois cet ordre d'exécution déterminé, le serveur de coordination 130 peut générer des signaux de commande concernant les opérations à effectuer et les transmettre aux serveurs de gestion 110, 120. Les serveurs de gestion 110, 120 peuvent ensuite gérer l'exécution des opérations par les équipements 111, 112, 113, 121, 122 qui leur sont rattachés.

Pour déterminer l'ordre d'exécution, le serveur de coordination peut avantageusement tenir compte des dépendances qui existent entre les différents équipements. Selon un mode de réalisation, le serveur de coordination est configuré pour recevoir des informations sur ces dépendances. Dans ce cas, l'envoi au serveur de coordination 130 des informations de dépendance entre les équipements 111, 112, 113, 121, 122 peut être effectué via une ou plusieurs technologies de communication. A titre d'exemples et de manière non limitative, il est possible d'utiliser une ou plusieurs technologies parmi une communication par voie filaire, et des technologies sans fil comme Wifi, Bluetooth, Bluetooth LE, Infrarouge, NFC, Zigbee, Enocean, Z-Wave, Sigfox, LTE-M ou LoRaWAN.

Par « dépendance » entre deux équipements, on entend que le fonctionnement de l'un des équipements est lié au fonctionnement de l'autre équipement, ou que l'exécution d'une opération par / sur un équipement a un effet sur l'autre équipement. En particulier, il peut exister une dépendance de connectivité entre deux équipements, lorsqu'un équipement offre la connectivité à l'autre équipement, ou qu'un équipement est connecté à un autre équipement. La dépendance de connectivité peut être physique (par exemple, dans le cadre d'une connexion filaire comme une connexion par un câble Ethernet ou par courants porteurs en ligne) ou logique (par exemple, dans le cadre d'une connexion sans fil, comme une connexion Wifi ou Bluetooth). Par exemple, dans le cas d'écouteurs communiquant en Bluetooth avec un terminal mobile multifonction (ou « smartphone » en anglais), il existe une dépendance de connectivité entre les écouteurs et le terminal mobile multifonction.

Il peut aussi exister une dépendance dite « de service » (ou encore « dépendance de service fonctionnelle ») entre les équipements, par exemple lorsqu'un équipement est configuré pour déclencher l'exécution d'une opération par un autre équipement. Par exemple, un assistant vocal peut être configuré pour commander l'extinction des lampes d'une pièce s'il a été détecté, par un détecteur de présence, que personne n'est présent dans cette pièce (il existe alors une dépendance de service entre le détecteur de présence, les lampes et l'assistant vocal).

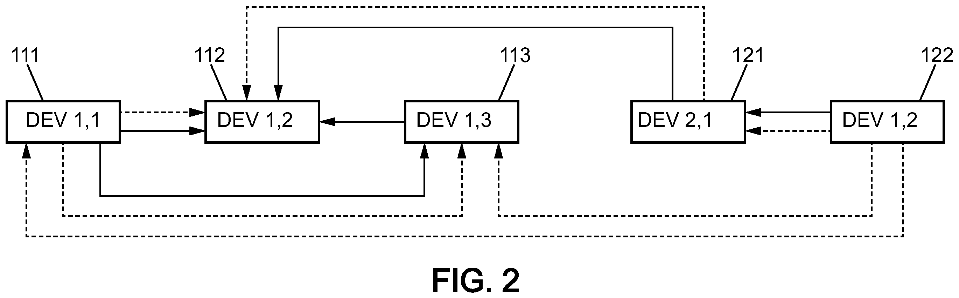

La figure 2 représente un exemple de dépendances entre plusieurs équipements informatiques.

Sur la figure 2, les dépendances de connectivité sont représentées par des flèches en pointillés, tandis que les dépendances de service sont représentées par des flèches en traits pleins.

A titre d'exemple, les équipements 111, 112 et 113 du premier groupe d'équipements peuvent correspondre respectivement à un mobile multifonction, des écouteurs Bluetooth et une montre connectée, et les équipements 121 et 122 du deuxième groupe d'équipements peuvent correspondre à un téléviseur (télévision sur IP) et à une passerelle d'accès ou boitier électronique, ou « box » en anglais, fournissant un accès, fixe et/ou mobile, à Internet haut débit.

Dans cet exemple, la box 122 est configurée pour fournir une connectivité Wifi au mobile multifonction 111, à la montre connectée 113 et au téléviseur 121. Le mobile multifonction est configuré pour communiquer en Bluetooth avec les écouteurs 112 et avec la montre 113. Lorsque les écouteurs 112 sont connectés au mobile multifonction 111, une application peut être lancée depuis le mobile multifonction 111, la montre connectée 113 ou le téléviseur 121 pour envoyer un contenu audio vers les écouteurs 112. Par ailleurs, le téléviseur est configuré pour afficher un contenu vidéo à partir d'un signal de commande émis par la box 122.

Cet exemple illustre la complexité des dépendances qui peuvent exister entre différents équipements gérés par des serveurs de gestion indépendants, et la nécessité de prendre en compte ces dépendances pour garantir le bon fonctionnement et la sécurité de ces équipements.

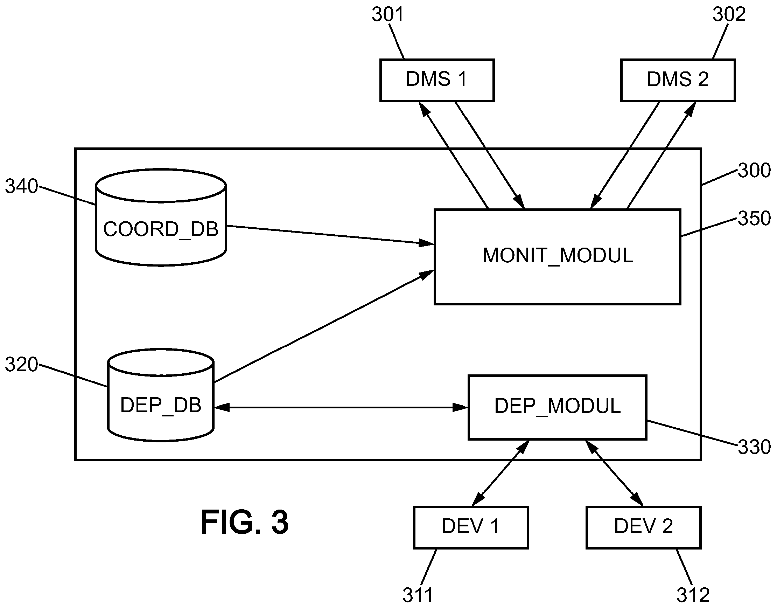

La figure 3 représente un serveur de coordination d'une pluralité de serveurs de gestion d'équipements, selon un mode de réalisation de l'invention.

Comme représenté sur la figure 3, un premier serveur de gestion 301 assure la gestion d'un premier équipement 311, et un deuxième serveur de gestion 302, indépendant du premier serveur de gestion 301, assure la gestion d'un deuxième équipement 312.

Le serveur de coordination 300 assure la coordination des serveurs de gestion 301 et 302, et notamment la coordination des opérations qui doivent être effectuées sur les équipements 311, 312 rattachés aux serveurs de gestion 301, 302. Afin de tenir compte des dépendances qui peuvent exister entre les équipements 311, 312 du réseau, le serveur de coordination comporte un module de dépendance 330.

Le module de dépendance 330 est configuré pour gérer les dépendances entre les différents équipements 311, 312, notamment les dépendances de connectivité et les dépendances de service. Le module de dépendance 330 peut être relié à une base de données de dépendance 320. Dans un mode de réalisation de l'invention, la base de données de dépendance 320 peut contenir des données permettant de caractériser l'ensemble des dépendances, ainsi que le type de dépendance, entre les différents équipements 311, 312 du réseau. Par exemple, la base de données de dépendance 320 peut être construite à partir d'un modèle entité-association (« entity-relationship diagram », ou ERD, en anglais), d'un dictionnaire des données, d'un graphe de dépendance, ou tout autre outil permettant de caractériser des relations entre des entités.

Avantageusement, le module de dépendance 330 est en outre configuré pour mettre à jour les dépendances enregistrées dans la base de données de dépendance 320, en ajoutant des nouvelles dépendances, en supprimant des dépendances obsolètes, ou en mettant à jour des dépendances (par exemple, le type de dépendance) entre des équipements, selon l'évolution du système (ajout/suppression d'équipements dans le système, modification de l'interconnexion entre les équipements pour échanger des informations, etc.).

Dans un mode de réalisation, la détermination des dépendances est effectuée par le module de dépendance 330, et donc au sein du serveur de coordination 300. Par exemple, cette détermination peut être effectuée en analysant les communications entre les différents équipements 311, 312.

Dans un mode de réalisation alternatif, la détermination/gestion des dépendances est effectuée par les équipements 311, 312. Selon ce mode de réalisation, la base de données de dépendance peut être distribuée dans les équipements (chaque équipement stocke les informations relatives aux dépendances qu'il peut avoir avec les autres équipements). Les équipements 311, 312 peuvent fournir au module de dépendance 330 les informations relatives à leurs dépendances avec les autres équipements. Par exemple, un équipement 311 peut définir un protocole pour envoyer au module de dépendance 330 les dépendances qu'il peut avoir avec les autres équipements 312 du système. Les informations de dépendance peuvent être décrites dans le modèle de données du protocole.

Par exemple, pour la dépendance de connectivité, l'équipement 311 peut être configuré pour analyser les communications sur ses différentes interfaces de communication, afin de détecter la dépendance de connectivité lorsqu'un autre équipement 312 se connecte à / se déconnecte de l'une de ces interfaces. Pour la dépendance de service, l'information peut être extraite depuis le micrologiciel de l'équipement 311, dans le cas où celui-ci comprend une description des services possibles pour l'équipement 311, ainsi que les dépendances de service avec les services effectués par les autres équipements 312 du système. Cette description peut, par exemple, être inscrite dans un fichier encapsulé dans le micrologiciel. Ces informations peuvent être envoyées au module de dépendance 330 du serveur de coordination 300, notamment après une mise à jour du micrologiciel, ou après une activation/ou désactivation des services concernés. Par exemple, une nouvelle mise à jour du micrologiciel d'un téléviseur peut permettre d'ajouter la nouvelle fonctionnalité « allumer une lampe par commande vocale ». La mise à jour du micrologiciel comprend des informations sur la dépendance de service entre le téléviseur et la lampe associées à cette nouvelle fonctionnalité (par exemple les différentes versions des interfaces de programmation de la lampe avec lesquelles la fonctionnalité est compatible, ou les références des lampes pour lesquelles la fonctionnalité est compatible). Après la mise à jour du micrologiciel et l'activation du service associé à cette nouvelle fonctionnalité, les informations de dépendance associées à ce nouveau service peuvent être remontées depuis l'équipement 311 vers le module de dépendance 330.

Dans un autre mode de réalisation, les informations de dépendance peuvent être transmises au module de dépendance 330 par les serveurs de gestion 301, 302. Pour cela, les serveurs de gestion 301, 302 doivent suivre un protocole permettant une telle transmission d'informations. Par exemple, le protocole TR-069 prévoit un échange bidirectionnel d'identité entre un équipement et la passerelle. L'équipement communique son identifiant ainsi que l'identifiant de la passerelle au serveur d'auto-configuration (en anglais, « Auto Configuration Server », ou ACS) et la passerelle communique au serveur d'auto-configuration les équipements qui lui sont connectés. Selon le standard TR-069, l'équipement et la passerelle peuvent être gérés par le même serveur d'auto-configuration, ou par deux serveurs d'auto-configuration distincts et indépendants. Ainsi, un tel protocole permet une transmission des informations de dépendance de connectivité du serveur de gestion 301, 302 vers le module de dépendance 330 du serveur de coordination 300.

Pour les dépendances de service, les informations de dépendance peuvent être fournies par le serveur de gestion suite à une activation d'un service dans un équipement 311 référencé dans un autre service d'un autre équipement 312. Les services embarqués dans le micrologiciel doivent être décrits et connus par le serveur de gestion 301, 302. Autrement dit, le serveur de gestion 301, 302 doit disposer de la description des services possibles pour l'équipement 311, ainsi que les dépendances de service avec les services effectués par les autres équipements 312 du système (par exemple, la compatibilité des interfaces de programmation). Les informations de dépendance peuvent être mises à jour après la réception d'une confirmation de mise à jour du micrologiciel ou d'une activation/désactivation du service.

Dans un autre mode de réalisation, les informations de dépendance peuvent être transmises au module de dépendance 330 par un composant externe. Par exemple, un service interactif peut permettre aux utilisateurs de décrire les dépendances entre les équipements (notamment en utilisant un logiciel de reconnaissance vocale - un utilisateur peut décrire oralement la dépendance à l'assistant vocal, qui peut ensuite traduire ces données sous la forme d'un graphe de dépendance). Selon un autre exemple, un composant externe peut être configuré pour analyser le réseau, collecter des informations sur les équipements et déterminer les dépendances (et les types de dépendances) entre les équipements. Dans ce cas, une autorisation de l'utilisateur peut être préalablement demandée pour des raisons de protection des données personnelles. Selon un autre exemple, si les différents équipements sont gérés par un même opérateur, il est possible d'explorer la base de données du Système d'Information (incluant notamment les contrats clients, les fiches descriptives des équipements, ...) pour définir les dépendances entre les équipements. Pour cela, il est possible d'utiliser des algorithmes type « traitement automatique du langage naturel » (en anglais, « Natural Language Processing », ou NLP). Selon cet exemple, une autorisation à la fois du côté de l'utilisateur et du côté du Système d'Information peut être préalablement demandée pour des raisons de protection des données personnelles.

Bien entendu, une combinaison des modes de réalisation précédents peut être utilisée pour la récupération des informations de dépendance au sein du module de dépendance 330. Par exemple, une partie des informations peut être envoyée depuis les équipements 311, 312, une autre partie des informations peut être envoyée depuis les serveurs de gestion 301, 302, etc.

Par ailleurs, le choix des composants configurés pour envoyer des informations de dépendance au module de dépendance 330 dépend des contraintes côté équipement 311, 312, côté serveur de gestion 301, 302, et côté utilisateur. Par exemple, l'identification des dépendances au sein des équipements 311, 312 offre le plus haut niveau de protection des données personnelles d'un utilisateur. Toutefois, cette identification nécessite un certain nombre de ressources, dont un équipement ne dispose pas nécessairement. Du côté du serveur de gestion 301, 302, celui-ci doit disposer d'un protocole permettant de récupérer des informations de dépendance et de les transmettre au module de dépendance 330. Si le protocole du serveur de gestion 301, 302 ne permet pas de récupérer / de transmettre les informations de dépendance, et si l'équipement 311, 312 ne dispose pas des ressources suffisantes, un composant externe peut être utilisé, si une autorisation coté utilisateur a été préalablement obtenue pour des raisons de protection des données personnelles.

La détermination des informations de dépendance peut être mise en œuvre suite à une requête (d'un utilisateur, d'un service, ...), pour limiter la consommation de bande passante, ou « en continu », afin que la base de données de dépendance 320 soit à jour en permanence et puisse ainsi éventuellement être utilisée par d'autres services.

Une première instruction, correspondant à l'initiation d'une première opération de gestion concernant le premier équipement 311, est envoyée par le premier serveur de gestion 301 en charge du premier équipement 311. Une deuxième instruction, correspondant à l'initiation d'une deuxième opération de gestion concernant le deuxième équipement 312, est envoyée par le deuxième serveur de gestion 302 en charge du deuxième équipement 312. Les opérations de gestion peuvent être initiées en parallèle ou de manière séquentielle.

Les instructions sont reçues au niveau du serveur de coordination 300, via le module de supervision 350. Le module de supervision 350 est configuré pour calculer et déterminer un ordre d'exécution entre les opérations de gestion correspondant aux instructions reçues, notamment à partir des dépendances entre les équipements 311, 312, enregistrées dans la base de données de dépendance 320.

L'ordre d'exécution des opérations de gestion peut être déterminé par le module de supervision 350 selon différents schémas décisionnels, qui peuvent être prédéfinis ou choisis en fonction de la configuration du système (nombre d'opérations de gestion à effectuer, bande passante disponible, ...). Dans un mode de réalisation, le module de supervision 350 peut être configuré pour appliquer une méthode de type « premier entré, premier sorti » (en anglais, « First In, First Out », ou FIFO). Selon cette méthode, les opérations sont exécutées selon leur ordre d'arrivée. Si une instruction pour un premier équipement 311 est transmise en premier au module de supervision 350, l'opération associée est exécutée en premier, et toutes les autres opérations destinées aux équipements 312 qui présentent une dépendance avec le premier équipement 311 sont verrouillées jusqu'à la finalisation de la première opération. Puis, la deuxième opération correspondant à l'instruction transmise au module de supervision 350 juste après la première instruction est initiée de manière similaire.

Avantageusement, l'ordre d'exécution entre les opérations de gestion correspondant aux instructions reçues est en outre déterminé à partir de règles de coordination d'exécution des opérations, et par conséquent des instructions associées, définies à partir de « politiques de coordination » enregistrées dans une base de connaissance de coordination 340.

Dans un mode de réalisation, le module de supervision 350 peut comprendre une mémoire tampon (ou « buffer » en anglais) pour stocker un ensemble d'instructions ainsi que les opérations de gestion en cours d'exécution, et déterminer l'ordre d'exécution et l'orchestration de cet ensemble d'instructions. Par exemple, l'ensemble d'instructions stockées peut comprendre toutes les instructions parvenues pendant un intervalle de temps donné (par exemple, toutes les instructions parvenues pendant 15 minutes au module de supervision), ou un nombre prédéterminé d'instructions (par exemple, 10 instructions reçues consécutivement). Des fenêtres de collecte des instructions sont ainsi définies. A la fin d'une fenêtre, le module de supervision détermine l'ordre d'exécution des opérations correspondant aux instructions stockées dans la fenêtre, tandis qu'une nouvelle fenêtre est initialisée.

Les politiques de coordination stockées dans la base de connaissance de coordination 340 peuvent être déterminées comme suit.

Chaque serveur de gestion 301, 302 destiné à être coordonné par le serveur de coordination 300 envoie des données permettant de décrire les équipements 311, 312 qui lui sont rattachés, les différentes opérations possibles sur ces équipements 311, 312 qui sont susceptibles d'avoir temporairement un effet sur les autres équipements, ainsi que les effets qui peuvent être engendrés suite à une exécution de ces opérations. Ces données peuvent être envoyées au module de supervision 350, à un autre module (différent du module de supervision 350 et du module de dépendance 330) du serveur de coordination 300, ou à un module de traitement externe au serveur de coordination 300.

Dans un environnement multiserveur comme celui représenté à la figure 3, les serveurs de gestion 301, 302 sont généralement indépendants et hétérogènes. Ainsi, ces données descriptives peuvent avantageusement être construites à partir d'un modèle définissant un vocabulaire commun permettant de décrire les différentes opérations et les effets associés à leurs exécutions.

Par exemple, les opérations possibles susceptibles d'avoir temporairement un effet sur les autres équipements peuvent comprendre :
- le redémarrage de l'équipement ;
- la mise à jour du micrologiciel de l'équipement ;
- la configuration de l'équipement (modification des paramètres, activation/désactivation d'un service, etc.) ; et
- la réinitialisation de l'équipement (rétablissement de la configuration d'usine).

Les effets qui peuvent être engendrés suite à une exécution de ces opérations peuvent comprendre :
- une perte de connectivité ; et
- une incompatibilité fonctionnelle.

Par exemple, une opération de réinitialisation, ou de configuration consistant à désactiver un service sur un équipement peut engendrer une incompatibilité fonctionnelle si un autre équipement utilise ce service. Selon un autre exemple, une opération de mise à jour, de redémarrage ou de réinitialisation d'un équipement peut entraîner une perte de connectivité de cet équipement, et des équipements qui lui sont connectés.

A partir des données descriptives des différentes opérations possibles et des effets qui peuvent être engendrés suite à une exécution de ces opérations, il est possible de définir des politiques de coordination, qui comprennent un ensemble de règles de coordination d'exécution des opérations en fonction des différentes configurations possibles.

Par exemple, une politique de coordination peut comprendre les règles de coordination d'exécution suivantes :
- si le serveur de coordination 300 reçoit des opérations de type « redémarrage », « mise à jour » ou « réinitialisation » pour un ou plusieurs équipement(s) 311, 312 ; et
- s'il existe des dépendances de connectivité entre les équipements 311, 312 concernés ;
- alors l'exécution de ces opérations se fait selon l'ordre suivant : les opérations sur les équipements « parents » (c'est-à-dire ceux qui fournissent la connectivité ou initient la connexion) d'abord, et les opérations des équipements « enfants » ensuite.

Les règles de coordination d'exécution peuvent aussi être fixées ou déterminées selon des objectifs prédéterminés. Par exemple, il peut être décidé que toutes les opérations ayant pour objectif l'amélioration de la sécurité d'un équipement ou du système, telle qu'une correction des failles de sécurité, sont prioritaires sur les autres.

Par ailleurs, il peut être intéressant de tenir compte des contrats de qualité de service pour déterminer les politiques de sécurité (en tant que politique de coordination), notamment dans le cas où les différents serveurs de gestion sont gérés par différents opérateurs. Par « contrat de qualité de service » (ou « entente de niveau de service », ou « Service-Level Agreement », SLA, en anglais), on entend un contrat souscrit entre un fournisseur de service et un client, définissant les objectifs attendus et le niveau de service que souhaite obtenir le client de la part du fournisseur, ainsi que les responsabilités de chacun des parties. A partir des contrats de qualité de service, il est possible de déterminer des niveaux de priorité différents pour les serveurs de gestion (par exemple, si les serveurs de gestion correspondent à des opérateurs différents et que le client a choisi de favoriser l'opérateur X par rapport aux autres opérateurs, les opérations associées au serveur de gestion de l'opérateur X peuvent être prioritaires sur les autres opérations), pour les opérations (par exemple, si le contrat stipule que les opérations sur certains équipements sont prioritaires par rapport aux opérations sur d'autres équipements), etc.

Les politiques de coordination peuvent être plus complexes. Elles peuvent notamment combiner plusieurs des exemples précédents. Elles peuvent également aller au-delà de la coordination des opérations reçues, notamment en générant de nouvelles opérations initialement non conçues pour garantir le fonctionnement des équipements qui dépendent de ces services, comme la vérification de l'état des services (activé/désactivé) après l'exécution des opérations, ou la vérification de la compatibilité des interfaces de programmation avant l'exécution des opérations de gestion des équipements. Par exemple, si une dépendance de service est détectée entre deux équipements concernés par les opérations reçues par le serveur de coordination, celui-ci peut demander au serveur de gestion de vérifier si les services de l'équipement « dépendant » sont toujours actifs. Si les services sont désactivés, le serveur de coordination peut identifier les services et demander au serveur de gestion de lancer une opération d'activation sur les services concernés par cette dépendance. Ainsi, de nouvelles opérations non initialement prévues sont générées.

Selon un autre exemple, si une dépendance de service entre deux équipements est détectée dans un système multi-opérateurs de serveurs de gestion, le serveur de coordination peut éventuellement bloquer l'exécution des opérations si une incompatibilité des interfaces de programmation est détectée ou prévisible. Par exemple, si une opération de mise à jour d'une interface de programmation d'un équipement A est disponible, alors que d'autres équipements utilisent cette interface de programmation, mais ne sont pas encore mis à jour pour supporter cette nouvelle version, le serveur de coordination bloque la mise à jour de l'équipement A jusqu'à ce que les équipements qui dépendent de cet équipement A soient compatibles. Les règles relatives aux interfaces de programmation du micrologiciel et à la compatibilité avec des interfaces de programmation externes peuvent être inscrites par le module de supervision 350 dans la base de connaissance de coordination.

Les politiques de coordination peuvent être définies par le module de supervision 350, par un autre module du serveur de coordination 300, ou par un module externe au serveur de coordination 300.

En référence à nouveau à la figure 3, le module de supervision 350 peut, à partir des règles de coordination d'exécution, associées aux politiques de coordination déterminer l'ordre d'exécution des opérations sur les équipements 311 et 312 et les transmettre aux serveurs de gestion 301, 302. Le module de supervision 350 peut ainsi être configuré pour envoyer au premier serveur de gestion 301 un signal de commande d'exécution de la première opération sur le premier équipement 311, et pour envoyer au deuxième serveur de gestion 302 un signal de commande d'exécution de la deuxième opération sur le deuxième équipement 312.

Dans l'exemple de la figure 3, le module de supervision 350 est configuré pour déterminer l'ordre d'exécution et orchestrer l'exécution des opérations auprès des serveurs de gestion 301, 302. Bien entendu, ces deux fonctions peuvent être assurées par deux modules distincts du serveur de coordination 300.

Selon un mode de réalisation, les signaux de commande sont envoyés vers les serveurs de gestion 301, 302 respectifs selon l'ordre d'exécution déterminé. Par exemple, si l'ordre d'exécution indique que l'opération sur le premier équipement 311 doit être effectuée après l'opération sur le deuxième équipement 312, alors les étapes suivantes peuvent être réalisées, dans cet ordre :
- un signal de commande est envoyé au deuxième serveur de gestion 302 pour commander l'exécution de la deuxième opération ;
- puis, un signal de commande est envoyé au premier serveur de gestion 301 pour commander l'exécution de la première opération.

Bien entendu, tout autre procédé permettant l'exécution des opérations selon l'ordre déterminé peut être utilisé. Par exemple, il est possible d'inclure, dans les signaux de commande, des informations d'horodatage indiquant quand l'opération doit être exécutée.

Dans le cas où des opérations peuvent être effectuées en parallèle, il est possible d'attribuer un même ordre d'exécution à ces opérations.

Dans un mode de réalisation, chaque serveur de gestion 301, 302 peut, après réception du signal de commande qui lui est destiné, envoyer un message d'accusé de réception pour indiquer qu'il a bien reçu le signal de commande. Dans ce mode de réalisation, le module de supervision 350 peut être configuré pour envoyer un signal de commande courant uniquement après réception de l'accusé de réception du signal de commande précédemment envoyé.

De manière alternative ou en complément, chaque serveur de gestion 301, 302 envoie un accusé d'exécution relatif à l'opération sur l'équipement dont il a la charge. Cet accusé d'exécution peut par exemple :
- indiquer que l'opération est terminée. Dans ce cas, le message est émis après la fin de la réalisation de l'opération. Ce mode de réalisation est avantageux lorsqu'une opération doit être terminée pour qu'une autre opération puisse être initiée (par exemple, une mise à jour de sécurité sur un ordinateur doit être terminée avant de synchroniser les données d'un mobile multifonction sur cet ordinateur) ; ou
- indiquer que l'opération est en cours de réalisation. Dans ce cas, le message peut juste indiquer que l'opération a été initiée. Ce mode de réalisation est avantageux lorsque les opérations peuvent être réalisées en parallèle.

Un serveur de coordination tel que défini précédemment peut être avantageusement utilisé dans de nombreux domaines.

Par exemple, dans le domaine de la maison connectée et la domotique, les dépendances de service et de connectivité sont nombreuses. Par exemple, dans le cas de la gestion du réseau local d'un client, un certain nombre d'équipements (comme le décodeur TV, ou STB pour « set-top box » en anglais) dépendent de la passerelle d'accès internet du client pour la connectivité du réseau local. Un conflit peut se produire si pendant qu'un équipement est lui-même en train de télécharger un nouveau micrologiciel, on demande à la passerelle d'accès de redémarrer ou de changer son propre micrologiciel, entrainant une perte de connectivité. La première mise à jour serait alors corrompue. Un serveur de coordination comme défini dans la présente invention permet de s'assurer qu'une commande de gestion d'équipement ne va pas être effectuée sur un élément assurant la connectivité pendant une mise à jour d'un autre équipement en dépendant.

Toujours dans le domaine de la maison connectée, de nombreux nouveaux services mettent en œuvre des assistants vocaux qui interagissent avec des objets connectés en se connectant à leur interface de programmation. Une mise à jour d'un objet connecté qui modifierait l'interface de programmation exposée de l'objet peut rendre le service inopérant, à moins de mettre à jour sur l'assistant vocal les ressources décrivant l'interface. Donc une mise à jour d'un objet connecté peut rendre nécessaire une configuration/mise à jour d'un autre objet. Un serveur de coordination comme défini dans la présente invention permet de coordonner et d'identifier des impacts croisés entre objets et de prendre les mesures nécessaires à la continuité de service. En effet, dans la solution proposée, le serveur de coordination peut commander au serveur de gestion de l'assistant vocal de mettre à jour les ressources des objets pouvant être impactés.

Les mêmes problématiques de gestion se retrouvent dans les domaines des villes intelligentes et des industries intelligentes. En effet, ces domaines exploitent et utilisent des équipements de type « passerelles de l'internet des objets », qui offrent des services de connectivité cellulaire similaires à ceux des passerelles d'accès localisées dans les maisons. De même, la gestion de la dépendance de service, et notamment la cohérence des mises à jour, entre plusieurs équipements en même temps est une problématique qui se pose aussi dans ces domaines.

Par ailleurs, la solution proposée permet une coordination multi-niveaux. D'une part, la solution proposée permet une coordination inter-opérateurs, qui peut être particulièrement intéressante, notamment dans le cas des services par contournement - aussi appelés services hors du fournisseur d'accès à l'internet (en anglais, « over-the-top » ou OTT). Dans ce cas, chaque opérateur peut disposer de son propre serveur de coordination, et l'ensemble des serveurs de coordination étant eux-mêmes coordonnés à un niveau supérieur. Dans ce cas, des accords entre les opérateurs concernés sont nécessaires. D'autre part, la solution proposée permet une coordination inter-constructeurs. En effet, une coordination entre les systèmes de gestion d'équipements est envisageable. Par exemple, il peut exister une coordination entre les mises à jour des micrologiciels sur des lampes connectées, et sur des assistants vocaux configurés pour commander l'allumage/l'extinction de ces lampes à distance. Dans ce cas, les deux constructeurs ont intérêt à mettre en place un serveur de coordination commun et externe à leurs propres systèmes.

La figure 4 est un ordinogramme du procédé de coordination d'une pluralité de serveurs de gestion d'équipements, selon un mode de réalisation de l'invention.

A une étape facultative 401, des données descriptives sont transmises depuis un serveur de gestion vers le serveur de coordination. Comme décrit précédemment, ces données permettent de décrire les équipements rattachés au serveur de gestion, les différentes opérations possibles sur ces équipements, ainsi que les effets qui peuvent être engendrés suite à une exécution de ces opérations. De manière alternative, les données descriptives peuvent être transmises à un serveur externe.

Aux étapes 402 et 403, le serveur de coordination reçoit des instructions correspondant à deux opérations sur deux équipements gérés par deux serveurs de gestion distincts, comme décrit plus haut.

A l'étape 404, le serveur de coordination obtient des informations de dépendance entre les deux équipements, comme décrit précédemment.

Toujours à l'étape 404, le serveur de coordination peut obtenir des règles de coordination d'exécution, définies par exemple par des politiques de coordination comme mentionné précédemment.

Un ordre d'exécution pour les opérations est ensuite déterminé (étape 405) à partir des informations de dépendance, ainsi que de règles de coordination d'exécution obtenues.

Comme décrit plus haut, des signaux de commande pour commander l'exécution des opérations selon l'ordre d'exécution déterminé sont ensuite générés (étape 406), et envoyés (étape 407) aux serveurs correspondants.

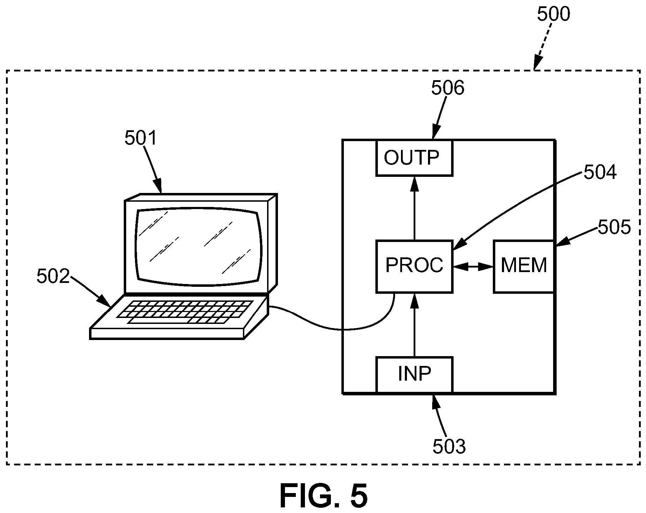

La figure 5 illustre un exemple de dispositif de coordination d'une pluralité de serveurs de gestion d'équipements, selon un mode de réalisation de l'invention.

Dans ce mode de réalisation, le dispositif 500 comprend une mémoire 505 pour stocker des instructions permettant la mise en œuvre du procédé, des données relatives aux opérations à exécuter reçues, des données relatives aux dépendances entre les équipements et des données temporaires pour réaliser les différentes étapes du procédé tel que décrit précédemment.

Le dispositif comporte en outre un circuit 504. Ce circuit peut être, par exemple :
- un processeur apte à interpréter des instructions sous la forme de programme informatique, ou
- une carte électronique dont les étapes du procédé de l'invention sont décrites dans le silicium, ou encore
- une puce électronique programmable comme une puce FPGA (pour « Field-Programmable Gate Array » en anglais), comme un SOC (pour « *System On Chip* » en anglais) ou comme un ASIC (pour « *Application Specific Integrated Circuit* » an anglais).

Les *SOC* ou système sur puce sont des systèmes embarqués qui intègrent tous les composants d'un système électronique dans une puce unique.

Un *ASIC* est un circuit électronique spécialisé qui regroupe des fonctionnalités sur mesure pour une application donnée. Les ASIC sont généralement configurés lors de leur fabrication et ne peuvent être que simulés par l'utilisateur.

Les circuits logiques programmables de type *FPGA (Field-Programmable Gate Array)* sont des circuits électroniques reconfigurables par l'utilisateur.

Ce dispositif comporte une interface d'entrée 503 pour la réception de données des instructions, des informations de dépendance et des accusés de réception/d'exécution, et une interface de sortie 506 pour la fourniture de signaux de commandes pour l'exécution des opérations selon l'ordre déterminé. Enfin, l'ordinateur peut comporter, pour permettre une interaction aisée avec un utilisateur, un écran 501 et un clavier 502. Bien entendu, le clavier est facultatif, notamment dans le cadre d'un ordinateur ayant la forme d'une tablette tactile, par exemple.

Dans un mode de réalisation particulier, l'interface d'entrée 503 est agencé pour recevoir des politiques de coordination.

En fonction du mode de réalisation, le dispositif 500 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, etc.

En fonction du mode de réalisation, la mémoire, l'unité de stockage de données ou le support de stockage amovible contient des instructions qui, lorsqu'elles sont exécutées par le circuit de commande 504, amènent ce circuit de commande 504 à effectuer ou contrôler les parties interface d'entrée 503, interface de sortie 506, stockage de données dans la mémoire 505 et/ou traitement de données des exemples de mise en œuvre du procédé proposé décrits dans les présentes.

Le circuit de commande 504 peut être un composant implémentant le contrôle des unités 503, 505 et 506 du dispositif 500.

En outre, le dispositif 500 peut être mis en œuvre sous forme logicielle, auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et logiciels, comme par exemple un programme logiciel destiné à être chargé et exécuté sur un composant électronique décrit ci-avant (ex. FPGA, processeur).

Le dispositif 500 peut également utiliser des architectures hybrides, comme par exemple des architectures basées sur un CPU+FPGA, un GPU (*Graphics Processing Unit*) ou un MPPA (*Multi-Purpose Processor Array*).

Par ailleurs, le schéma fonctionnel présenté sur la figure 4 est un exemple typique d'un programme dont certaines instructions peuvent être réalisées auprès du serveur décrit. A ce titre, la figure 4 peut correspondre à l'organigramme de l'algorithme général d'un programme informatique au sens de l'invention.

Bien entendu, la présente invention ne se limite pas aux formes de réalisation décrites ci-avant à titre d'exemples ; elle s'étend à d'autres variantes.

D'autres réalisations sont possibles.

Par exemple, il peut y avoir plusieurs serveurs de coordination, chacun associé à un groupe de serveurs de gestion appartenant à un même opérateur. Autrement dit, il peut y avoir un serveur de coordination par opérateur. Dans ce cas, pour coordonner les opérations inter-opérateurs de gestion d'équipements en fonction de la dépendance entre les équipements, un coordinateur hiérarchique qui coordonne les serveurs de coordination de chaque opérateur est nécessaire. De plus, dans ce cas, les opérateurs doivent partager le même méta-modèle pour respectivement les bases de données de dépendance et les bases de connaissance de coordination pour garantir l'interopérabilité entre les serveurs de coordination.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et l'équipement pour la mise en œuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous combinaisons des aspects et caractéristiques font partie de la portée de l'invention. En outre, il se peut que certains systèmes et équipements décrits ci-dessus n'incorporent pas la totalité des modules et fonctions décrits pour les modes de réalisation préférés.

## Revendications

1. Procédé de coordination d'une pluralité de serveurs (301, 302) de gestion d'équipements dans un réseau informatique, ladite pluralité de serveurs de gestion d'équipements comprenant au moins un premier serveur de gestion (301) et un deuxième serveur de gestion (302) distincts, le procédé, mis en œuvre par un serveur informatique de coordination (300), comprenant :
- recevoir (402) une première instruction à destination d'un premier équipement (311) rattaché audit premier serveur de gestion (301) ;
- recevoir (403) une deuxième instruction à destination d'un deuxième équipement (312) rattaché audit deuxième serveur de gestion (302) ;
- obtenir (404) des informations de dépendance relatives à une dépendance entre le premier équipement (311) et le deuxième équipement (312) ;
- obtenir des règles de coordination d'exécution de la première instruction et de la deuxième instruction ;
- déterminer (405) un ordre d'exécution de la première instruction et de la deuxième instruction à partir des informations de dépendance et des règles de coordination obtenues ;
- générer (406) et envoyer (407) un premier signal de commande d'exécution de la première instruction et un deuxième signal de commande d'exécution de la deuxième instruction en fonction de l'ordre déterminé.

2. Procédé selon la revendication 1, dans lequel lesdites informations de dépendance comprennent :
- une information de dépendance de connectivité entre le premier équipement (311) et le deuxième équipement (312) ; et/ou
- une information de dépendance de service entre le premier équipement (311) et le deuxième équipement (312).

3. Procédé selon l'une des revendications précédentes, comprenant en outre :
- pour chaque serveur de gestion courant parmi le premier serveur de gestion (301) et le deuxième serveur de gestion (302), recevoir (401) des données descriptives correspondant audit serveur de gestion courant, lesdites données descriptives comprenant :
une définition d'une pluralité d'équipements (311, 312) rattachés audit serveur de gestion courant,
des informations de dépendance entre des équipements de ladite pluralité d'équipements (311, 312) rattachés audit serveur de gestion courant,
une définition d'opérations associées à ladite pluralité d'équipements rattachés audit serveur de gestion courant, et
une définition d'effets associés auxdites opérations sur au moins un équipement parmi ladite pluralité d'équipements rattachés audit serveur de gestion courant ;
- déterminer lesdites règles de coordination d'exécution à partir desdites données descriptives reçues pour le premier serveur de gestion et le deuxième serveur de gestion.

4. Procédé selon la revendication 3, dans lequel lesdites règles de coordination d'exécution sont en outre déterminées à partir de critères de qualité de service prédéterminés.

5. Procédé selon l'une des revendications précédentes, comprenant en outre :
- pour chaque signal de commande parmi ledit premier signal de commande et ledit deuxième signal de commande, recevoir un accusé de réception dudit signal de commande.

6. Procédé selon l'une des revendications précédentes, comprenant en outre :
- pour chaque signal de commande parmi ledit premier signal de commande et ledit deuxième signal de commande, recevoir un accusé d'exécution de l'instruction respective associée audit signal de commande.

7. Procédé selon la revendication 6, dans lequel l'ordre d'exécution définit une instruction à exécuter en premier parmi la première instruction et la deuxième instruction, le procédé comprenant en outre :
- recevoir l'accusé d'exécution de l'instruction à exécuter en premier en réponse à l'envoi du signal de commande associé ;
dans lequel le signal de commande associé à l'instruction à exécuter en deuxième est envoyé (407) seulement après réception dudit accusé d'exécution.

8. Serveur de coordination (300) d'une pluralité de serveurs (301, 302) de gestion d'équipements dans un réseau informatique, ladite pluralité de serveurs de gestion d'équipements comprenant au moins un premier serveur de gestion (301) et un deuxième serveur de gestion (302) distincts, le serveur de coordination étant configuré pour :
- recevoir (402) une première instruction à destination d'un premier équipement (311) rattaché audit premier serveur de gestion (301) ;
- recevoir (403) une deuxième instruction à destination d'un deuxième équipement (312) rattaché audit deuxième serveur de gestion (302) ;
- obtenir (404) des informations de dépendance relatives à une dépendance entre le premier équipement (311) et le deuxième équipement (312) ;
- obtenir des règles de coordination d'exécution de la première instruction et de la deuxième instruction ;
- déterminer (405) un ordre d'exécution pour la première instruction et la deuxième instruction à partir des informations de dépendance et des règles de coordination obtenues ;
- générer (406) et envoyer (407) un premier signal de commande d'exécution de la première instruction et un deuxième signal de commande d'exécution de la deuxième instruction en fonction de l'ordre déterminé.

9. Un système comprenant :
- une pluralité de serveurs (301, 302) de gestion d'équipements dans un réseau informatique, ladite pluralité de serveurs de gestion d'équipements comprenant au moins un premier serveur de gestion (301) et un deuxième serveur de gestion (302) distincts ;
- une pluralité d'équipements (311, 312) rattachés à ladite pluralité de serveurs (301, 302) de gestion d'équipements, ladite pluralité d'équipements comprenant au moins un premier équipement (311) rattaché audit premier serveur de gestion (301) et un deuxième équipement (312) rattaché audit deuxième serveur de gestion (302) ;
- au moins une mémoire stockant :
- une base de données de dépendance (320) comprenant des informations de dépendance relatives à une dépendance entre des équipements parmi ladite pluralité d'équipements (311, 312) ; et
- une base de connaissance de coordination (340) comprenant une pluralité de règles de coordination d'instructions sur des équipements parmi ladite pluralité d'équipements (311, 312) ;
- un serveur de coordination (300) configuré pour :
- recevoir (402) une première instruction à destination dudit premier équipement (311) ;
- recevoir (403) une deuxième instruction à destination dudit deuxième équipement (312) ;
- obtenir (404), à partir de la base de données de dépendance, des informations de dépendance entre le premier équipement (311) et le deuxième équipement (312) ;
- obtenir, à partir de la base de connaissance de coordination, des règles de coordination d'exécution de la première instruction et de la deuxième instruction ;
- déterminer (405) un ordre d'exécution pour la première instruction et la deuxième instruction à partir desdites informations de dépendance obtenues et desdites règles de coordination obtenues ;
- générer (406) et envoyer (407) un premier signal de commande d'exécution de la première instruction et un deuxième signal de commande d'exécution de la deuxième instruction en fonction de l'ordre déterminé.

10. Produit programme informatique comportant des instructions pour la mise en œuvre du procédé selon l'une des revendications 1 à 7, lorsque ce programme est exécuté par un processeur.

## Patentansprüche

1. Verfahren zur Koordination einer Mehrzahl von Vorrichtungsverwaltungsservern (301, 302) in einem informationstechnischen Netzwerk, wobei die Mehrzahl von Vorrichtungsverwaltungsservern mindestens einen ersten Verwaltungsserver (301) und einen zweiten Verwaltungsserver (302), die verschieden sind, umfasst, wobei das von einem informationstechnischen Koordinationsserver (300) implementierte Verfahren umfasst:
- Empfangen (402) einer ersten Anweisung, die an eine erste Vorrichtung (311) gerichtet ist, die mit dem ersten Verwaltungsserver (301) verbunden ist;
- Empfangen (403) einer zweiten Anweisung, die an eine zweite Vorrichtung (312) gerichtet ist, die mit dem zweiten Verwaltungsserver (302) verbunden ist;
- Erhalten (404) von Abhängigkeitsinformationen bezüglich einer Abhängigkeit zwischen der ersten Vorrichtung (311) und der zweiten Vorrichtung (312);
- Erhalten von Koordinationsregeln zur Ausführung der ersten Anweisung und der zweiten Anweisung;
- Ermitteln (405) einer Ausführungsreihenfolge der ersten Anweisung und der zweiten Anweisung ausgehend von den erhaltenen Abhängigkeitsinformationen und Koordinationsregeln;
- Erzeugen (406) und Senden (407) eines ersten Steuersignals zur Ausführung der ersten Anweisung und eines zweiten Steuersignals zur Ausführung der zweiten Anweisung in Abhängigkeit von der ermittelten Reihenfolge.

2. Verfahren nach Anspruch 1, wobei die Abhängigkeitsinformationen umfassen:
- eine Konnektivitätsabhängigkeitsinformation zwischen der ersten Vorrichtung (311) und der zweiten Vorrichtung (312); und/oder
- eine Dienstabhängigkeitsinformation zwischen der ersten Vorrichtung (311) und der zweiten Vorrichtung (312).

3. Verfahren nach einem der vorhergehenden Ansprüche, umfassend ferner:
- für jeden aktuellen Verwaltungsserver unter dem ersten Verwaltungsserver (301) und dem zweiten Verwaltungsserver (302), Empfangen (401) von dem aktuellen Verwaltungsserver entsprechenden deskriptiven Daten, wobei die deskriptiven Daten umfassen:
eine Definition einer Mehrzahl von Vorrichtungen (311, 312), die mit dem aktuellen Verwaltungsserver verbunden sind,
Abhängigkeitsinformationen zwischen Vorrichtungen der Mehrzahl von Vorrichtungen (311, 312), die mit dem aktuellen Verwaltungsserver verbunden sind,
eine Definition von Vorgängen, die der Mehrzahl von Vorrichtungen zugeordnet sind, die mit dem aktuellen Verwaltungsserver verbunden sind, und
eine Definition von Auswirkungen, die den Vorgängen auf mindestens einer Vorrichtung unter der Mehrzahl von Vorrichtungen, die mit dem aktuellen Verwaltungsserver verbunden sind, zugeordnet sind;
- Ermitteln der Koordinationsregeln zur Ausführung ausgehend von den empfangenen deskriptiven Daten für den ersten Verwaltungsserver und den zweiten Verwaltungsserver.

4. Verfahren nach Anspruch 3, wobei die Koordinationsregeln zur Ausführung ferner ausgehend von vorbestimmten Dienstgütekriterien ermittelt werden.

5. Verfahren nach einem der vorhergehenden Ansprüche, umfassend ferner:
- für jedes Steuersignal unter dem ersten Steuersignal und dem zweiten Steuersignal, Empfangen einer Empfangsbestätigung für das Steuersignal.

6. Verfahren nach einem der vorhergehenden Ansprüche, umfassend ferner:
- für jedes Steuersignal unter dem ersten Steuersignal und dem zweiten Steuersignal, Empfangen einer Ausführungsbestätigung für die jeweilige Anweisung, die dem Steuersignal zugeordnet ist.

7. Verfahren nach Anspruch 6, wobei die Ausführungsreihenfolge eine als Erste auszuführende Anweisung unter der ersten Anweisung und der zweiten Anweisung definiert, wobei das Verfahren ferner umfasst:
- Empfangen der Ausführungsbestätigung für die als Erste auszuführende Anweisung als Antwort auf das Senden des zugeordneten Steuersignals;
wobei das Steuersignal, das der als Zweite auszuführenden Anweisung zugeordnet ist, erst nach dem Empfangen der Ausführungsbestätigung gesendet (407) wird.

8. Koordinationsserver (300) für eine Mehrzahl von Vorrichtungsverwaltungsservern (301, 302) in einem informationstechnischen Netzwerk, wobei die Mehrzahl von Vorrichtungsverwaltungsservern mindestens einen ersten Verwaltungsserver (301) und einen zweiten Verwaltungsserver (302), die verschieden sind, umfasst, wobei der Koordinationsserver ausgestaltet ist zum:
- Empfangen (402) einer ersten Anweisung, die an eine erste Vorrichtung (311) gerichtet ist, die mit dem ersten Verwaltungsserver (301) verbunden ist;
- Empfangen (403) einer zweiten Anweisung, die an eine zweite Vorrichtung (312) gerichtet ist, die mit dem zweiten Verwaltungsserver (302) verbunden ist;
- Erhalten (404) von Abhängigkeitsinformationen bezüglich einer Abhängigkeit zwischen der ersten Vorrichtung (311) und der zweiten Vorrichtung (312);
- Erhalten von Koordinationsregeln zur Ausführung der ersten Anweisung und der zweiten Anweisung;
- Ermitteln (405) einer Ausführungsreihenfolge für die erste Anweisung und die zweite Anweisung ausgehend von den erhaltenen Abhängigkeitsinformationen und Koordinationsregeln;
- Erzeugen (406) und Senden (407) eines ersten Steuersignals zur Ausführung der ersten Anweisung und eines zweiten Steuersignals zur Ausführung der zweiten Anweisung in Abhängigkeit von der ermittelten Reihenfolge.

9. System, umfassend:
- eine Mehrzahl von Vorrichtungsverwaltungsservern (301, 302) in einem informationstechnischen Netzwerk, wobei die Mehrzahl von Vorrichtungsverwaltungsservern mindestens einen ersten Verwaltungsserver (301) und einen zweiten Verwaltungsserver (302), die verschieden sind, umfasst;
- eine Mehrzahl von Vorrichtungen (311, 312), die mit der Mehrzahl von Vorrichtungsverwaltungsservern (301, 302) verbunden sind, wobei die Mehrzahl von Vorrichtungen mindestens eine erste Vorrichtung (311), die mit dem ersten Verwaltungsserver (301) verbunden ist, und eine zweite Vorrichtung (312), die mit dem zweiten Verwaltungsserver (302) verbunden ist, umfasst;
- mindestens einen Speicher, der speichert:
- eine Abhängigkeitsdatenbank (320), die Abhängigkeitsinformationen bezüglich einer Abhängigkeit zwischen Vorrichtungen unter der Mehrzahl von Vorrichtungen (311, 312) umfasst; und
- eine Koordinationswissensbasis (340), die eine Mehrzahl von Regeln zur Koordination von Anweisungen auf Vorrichtungen unter der Mehrzahl von Vorrichtungen (311, 312) umfasst;
- einen Koordinationsserver (300), der ausgestaltet ist zum:
- Empfangen (402) einer ersten Anweisung, die an die erste Vorrichtung (311) gerichtet ist;
- Empfangen (403) einer zweiten Anweisung, die an die zweite Vorrichtung (312) gerichtet ist;
- Erhalten (404), ausgehend von der Abhängigkeitsdatenbank, von Abhängigkeitsinformationen zwischen der ersten Vorrichtung (311) und der zweiten Vorrichtung (312);
- Erhalten, ausgehend von der Koordinationswissensbasis, von Koordinationsregeln zur Ausführung der ersten Anweisung und der zweiten Anweisung;
- Ermitteln (405) einer Ausführungsreihenfolge für die erste Anweisung und die zweite Anweisung ausgehend von den erhaltenen Abhängigkeitsinformationen und den erhaltenen Koordinationsregeln;
- Erzeugen (406) und Senden (407) eines ersten Steuersignals zur Ausführung der ersten Anweisung und eines zweiten Steuersignals zur Ausführung der zweiten Anweisung in Abhängigkeit von der ermittelten Reihenfolge.

10. Computerprogrammprodukt, das Anweisungen beinhaltet, die bei der Ausführung dieses Programms durch einen Prozessor das Verfahren nach einem der Ansprüche 1 bis 7 ausführen.

## Claims

1. Method for coordinating a plurality of device management servers (301, 302) in a computer network, said plurality of device management servers comprising at least a first management server (301) and a second management server (302) which are distinct from one another, the method, implemented by a coordination computer server (300), comprising:
- receiving (402) a first instruction for a first device (311) connected to said first management server (301);
- receiving (403) a second instruction for a second device (312) connected to said second management server (302);
- obtaining (404) dependence information relating to a dependence between the first device (311) and the second device (312);
- obtaining coordination rules for executing the first instruction and the second instruction;
- determining (405), on the basis of the dependence information and the coordination rules obtained, an order for executing the first instruction and the second instruction;
- generating (406) and sending (407) a first control signal for executing the first instruction and a second control signal for executing the second instruction according to the determined order.

2. Method according to Claim 1, wherein said dependence information comprises:
- connectivity dependence information between the first device (311) and the second device (312); and/or
- service dependence information between the first device (311) and the second device (312).

3. Method according to either of the preceding claims, further comprising:
- for each current management server among the first management server (301) and the second management server (302), receiving (401) descriptive data corresponding to said current management server, said descriptive data comprising:
a definition of a plurality of devices (311, 312) connected to said current management server,
dependence information between devices of said plurality of devices (311, 312) connected to said current management server,
a definition of operations associated with said plurality of devices connected to said current management server, and
a definition of effects associated with said operations on at least one device among said plurality of devices connected to said current management server;
- determining said execution coordination rules on the basis of said received descriptive data for the first management server and the second management server.

4. Method according to Claim 3, wherein said execution coordination rules are further determined on the basis of predetermined quality-of-service criteria.

5. Method according to one of the preceding claims, further comprising:
- for each control signal among said first control signal and said second control signal, receiving a confirmation of receipt of said control signal.

6. Method according to one of the preceding claims, further comprising:
- for each control signal among said first control signal and said second control signal, receiving a confirmation of execution of the respective instruction associated with said control signal.

7. Method according to Claim 6, wherein the order of execution defines an instruction to be executed first among the first instruction and the second instruction, the method further comprising:
- receiving the confirmation of execution of the instruction to be executed first in response to the sending of the associated control signal;
wherein the control signal associated with the instruction to be executed second is sent (407) only after said confirmation of execution has been received.

8. Server (300) for coordinating a plurality of device management servers (301, 302) in a computer network, said plurality of device management servers comprising at least a first management server (301) and a second management server (302) which are distinct from one another, the coordination server being configured to:
- receive (402) a first instruction for a first device (311) connected to said first management server (301);
- receive (403) a second instruction for a second device (312) connected to said second management server (302);
- obtain (404) dependence information relating to a dependence between the first device (311) and the second device (312);
- obtain coordination rules for executing the first instruction and the second instruction;
- determine (405), on the basis of the dependence information and the coordination rules obtained, an order of execution for the first instruction and the second instruction;
- generate (406) and send (407) a first control signal for executing the first instruction and a second control signal for executing the second instruction according to the determined order.

9. System comprising:
- a plurality of device management servers (301, 302) in a computer network, said plurality of device management servers comprising at least a first management server (301) and a second management server (302) which are distinct from one another;
- a plurality of devices (311, 312) connected to said plurality of device management servers (301, 302), said plurality of devices comprising at least a first device (311) connected to said first management server (301) and a second device (312) connected to said second management server (302);
- at least one memory storing:
- a dependence database (320) comprising dependence information relating to a dependence between devices among said plurality of devices (311, 312); and
- a coordination knowledge base (340) comprising a plurality of coordination rules for instructions on devices among said plurality of devices (311, 312);
- a coordination server (300) configured to:
- receive (402) a first instruction for said first device (311);
- receive (403) a second instruction for said second device (312);
- obtain (404), from the dependence database, dependence information between the first device (311) and the second device (312);
- obtain, from the coordination knowledge base, coordination rules for executing the first instruction and the second instruction;
- determine (405), on the basis of said dependence information obtained and said coordination rules obtained, an order of execution for the first instruction and the second instruction;
- generate (406) and send (407) a first control signal for executing the first instruction and a second control signal for executing the second instruction according to the determined order.

10. Computer program product comprising instructions for implementing the method according to one of Claims 1 to 7 when this program is executed by a processor.
